# EUROPÄISCHE PATENTSCHRIFT

(11) **EP 1 231 485 B1**
(45) Veröffentlichungstag und Bekanntmachung des Hinweises auf die Patenterteilung: **14.12.2011**
(21) Anmeldenummer: 02100108.6
(22) Anmeldetag: 06.02.2002
(51) Int. Cl.: G01T 1/29, G01T 1/17

(54) **Röntgendetektor mit grossem Dynamikbereich**
X ray detector with a wide dynamic range
Détecteur rayons X avec une gamme dynamique

(30) Priorität: 10.02.2001 DE 10106221
(43) Veröffentlichungstag der Anmeldung: 14.08.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Overdick, Michael Dr., Philips C.I.P. GmbH, 52066, Aachen (DE); Rütten, Walter Dr., Philips C.I.P. GmbH, 52066, Aachen (DE); Zaengel, Thomas Dr., Philips C.I.P. GmbH, 52066, Aachen (DE)
(74) Vertreter: Volmer, Georg

(56) Entgegenhaltungen:
- EP-A- 0 240 718
- US-A- 4 092 539
- US-A- 4 591 984
- US-A- 5 184 018

## Beschreibung

Die Erfindung betrifft einen Röntgendetektor enthaltend mindestens eine Konversionseinheit, mindestens eine Auswerteeinheit zum Zählen und zur Integration von absorbierten Röntgenquanten sowie mindestens eine Datenverarbeitungseinheit. Ferner betrifft sie ein Verfahren zur Auswertung der Absorptionssignale eines Röntgendetektors, welcher vorzugsweise in einem Computertomographen gegenüber einer Röntgenstrahlungsquelle angeordnet ist und eine Röntgenuntersuchungsgerät mit einer Röntgenstrahlungsquelle zur Abgabe von Röntgenstrahlung und einem Röntgendetektor

In Räntgendetektoren und Röntgen-Bilderzeugungssytemen werden absorbierte Röntgenquanten in elektrische Ladungssignale umgewandelt. Derartige Röntgendetektoren werden zum Beispiel im medizinischen Bereich in der Computertomographie (CT) verwendet. Weitere Anwendungen von Röntgendetektoren liegen der Industrie (zum Beispiel Werkstoffprüfung) oder in der Sicherheitstechnik. Üblicherweise bestehen (dynamische) Röntgendetektoren dabei aus
a) einer Konversionseinheit oder -stufe, die einen großen Teil der eintreffenden Röntgenquanten absorbiert und in elektrische Ladungssignale umwandelt,
b) einer Auswerteeinheit oder -stufe, in der die Signale der Konversionseinheit verstärkt und weiterverarbeitet werden, sowie
c) einer Datenverarbeitungseinheit oder -stufe mit Mitteln zur Datenerfassung, zur Steuerung und zur Ausgabe der erfassten Signale.

In der Auswerteeinheit werden üblicherweise zwei verschiedene Verarbeitungskonzepte angswendet. So gibt es zum einen integrierende Auswerteeinheiten, wie sie zum Beispiel in der EP 434 154 oder der EP 440 282 beschrieben werden. Bei diesen Einheiten werden die von der Konversionseinheit bereitgestellten Ladungssignale über einen vorgegebenen Zeitraum, die sog. Integrationsperiode, integriert. Das Ergebnis dieser Integration stellt dann idealerweise die während der Integrationsperiode in der Konversionseinheit von den absorbierten Röntgenquanten deponierte Energie dar.

Daneben gibt es ferner das Konzept der zählenden Auswerteeinheiten (vgl. P. Fischer et al., "A counting pixel readout chip for imaging applications", Nucl. Instr. and Meth A 405 (1998) 53-59). Dabei werden die von einzelnen Röntgenquanten in der Konversionseinheit erzeugten Ladungspulse einzeln erfasst und gezählt. Üblicherweise verwendet man hierzu einen signalformenden Verstärker mit nachgeschaltetem Komparator, dessen digitale Ausgangsimpulse dann von einem Zähler gezählt werden. Idealerweise entspricht die so bestimmte Zahl der in einer Zählpetiode registrierten Ladungspulse gerade der Anzahl der in dieser Zeit in der Konversionseinheit absorbierten Röntgenquanten. Der Vorteil der Zählmethode liegt darin, dass ein sehr großer Zählbereich mit im Prinzip idealer Linearität abgedeckt werden kann. Der Zählbereich ist dabei im Prinzip nur durch die Tiefe des verwendeten Zählers begrenzt. Problematisch bei der Methode ist jedoch, dass die erreichbaren Zählraten (das heißt Zählimpulse pro Zeit) durch verschiedene Totzeiteffekte, in denen keine Signale registriert werden können, sowie durch eine begrenzte Bandbreite der analogen Elektronik beschränkt sind.

Im Gegensatz hierzu erlaubt die Integrationsmethode auch einen Betrieb bei sehr hohen Quantenflüssen. Sie ist jedoch in Bezug auf den nutzbaren Dynamikbereich und die Linearität eher begrenzt. Bei der Integrationsmethode ist ferner bekannt, dass durch verschiedene Nachbildeffekte Reste vorhergehender Röntgenaufnahmen in nachfolgenden Bildern noch vorhanden sein können. Ein Beispiel ist das von vielen Szintillatoren bekannte Nachleuchten ("afterglow"). Zählende Detektoren sind von solchen Nachbildeffekten im Allgemeinen weniger betroffen, da die Nachbildeffekte normalerweise nicht zu signifikanten kurzzeitigen Ladungspulsen führen und somit die Zählergebnisse nicht verfälschen.

Weiterhin ist aus der US 4 591 984 ein Röntgendetektor bekannt, bei welchem die Ladungssignale aus einer Konversionseinheit alternativ einer Zählung oder einer Integration unterworfen werden können. Für die Zählung werden sie über einen Pulshöhenanalysator geleitet, dessen Ausgung nur bei Überschreiten eines Schwellwertes durch das Ladungssignal aktiviert wird. Die Häufigkeit solcher Aktivierungen des Ausganges können dann von einem Zähler gezählt werden. Alternativ können die Ladungssignale auch über einen Tiefpassfilter in eine Integrationsschaltung geleitet werden, wo die Ladungen über einen wählbaren Zeitraum in einem Kondensator angesammelt werden. Wenn eine Auswertung des Integrationsergebnisses erfolgen soll, wird der Kondensator mit einem Konstantstrom entladen. Solange die Spannung des Kondensators dabei oberhalb einer Referenzspannung bleibt, werden die Impulse eines externen Taktsignals dem oben erwähnten Zähler zugeführt und dort gezählt. Je größer die im Kondensator angesammelte Ladung ist, desto länger dauert der Entladungsvorgang und desto länger bleibt dementsprechend die Spannung des Kondensators oberhalb der Referenzspannung. Dies führt wiederum dazu, dass entsprechend mehr Takte des Taktsignals vom Zähler gezählt werden.

Mit dem aus der US 4 591 984 bekannten Röntgendetektor können durch Umlegen eines Schalters wahlweise die Ausgangsimpulse des Pulshöhenanalysators oder die durchgelassenen Impulse des externen Taktsignals dem Zähler zugeführt werden. Je nach Stellung des Schalters findet somit ein Zählen der absorbierten Röntgenquanten oder eine Messung der absorbierten Strahlungsenergie statt. Da die Zählmethode bei geringeren Quantenflüssen und die Integrationsmethode bei höheren Quantenflüssen präziser ist, kann durch eine entsprechende Schalterstellung die jeweils bessere Messmethode zum Einsatz kommen. Dabei ist vom Anwender vorher einzuschätzen, welche Quantenflüsse zu erwarten sind, so dass er die Schalterstellung entsprechend wählen kann. Dies ist jedoch nachteilig, da es ein Vorwissen über die beste einzusetzende Methode erfordert. Wenn die Einstellung des Schalters falsch vorgenommen wird, kann das Ergebnis eines Röntgenvorganges nicht mit der optimalen Methode ausgewertet werden. Unter Umständen muss dann der Röntgenvorgang wiederholt werden, was insbesondere bei medizinischen Anwendungen aufgrund der damit verbundenen Strahlenbelastung für den Patienten unbedingt vermieden werden sollte

Aus der US4092539 ist ein Strahlungsdetektor bekannt enthaltend eine Konversionseinheit zur Absorption von Strahlungsquanten unter Erzeugung eines elektrischen Ladungssignals, eine Auswerteeinheit zur Verarbeitung des Ladungssignals in einem Zählkanal, welcher an seinem Zähleraussgang ein Maß für die Anzahl der erfassten Ladungssignale bereitstellt, sowie parallel hierzu in einem Integratorkanal, welcher an seinem Integratorausgang ein Maß für die gesamte Ladung der Ladungssignale bereitstellt, und eine Teilungseinheit welcher die Signale in Kombination verarbeit und welcher an seinem Ausgang ein Maß für den mittleren Aborptionsenergie der in einem Zeitintervall absorbierten Strahlungsquanten bestimmt.

Vor diesem Hintergrund war es Aufgabe der vorliegenden Erfindung, einen verbesserten Röntgendetektor, ein Verfahren zur Auswertung der Signale eines Röntgendetektors und ein Röntgenuntersuchungsgerät mit einem Röntgendetektor bereitzustellen, mit denen eine optimale Messung in einem großen Dynamikbereich ohne Voreinstellungen durch einen Anwender möglich ist.

Diese Aufgabe wird durch einen Röntgendetektor mit den Merkmalen des Anspruchs 1 sowie ein Verfahren mit den Merkmalen des Anspruchs 6 gelöst. Vorteilhafte Ausgestaltungen sind in den abhängigen Ansprüchen enthalten.

Der erfindungsgemäße Röntgendetektor enthält die folgenden Elemente:
a) mindestens eine Konversionseinheit, in welcher Röntgenquanten absorbiert werden und dabei ein elektrisches Ladungssignal erzeugen, dessen Größe mit der absorbierten Energie korrespondiert,
b) mindestens eine Auswerteeinheit, in der das genannte Ladungssignal der Konversionseinheit parallel in einem Zählkanal und in einem Integratorkanal verarbeitet wird, wobei der Zählkanal an seinem Zählerausgang ein Maß für die Anzahl der seit einem Messbeginn erfassten Ladungssignale bereitstellt, und wobei der Integratorkanal an seinem Integratorausgang ein Maß für die gesamte Ladung der seit einem Messbeginn erfassten Ladungssignale bereitstellt; der Messbeginn für den Zählkanal ist dabei vorzugsweise identisch mit dem Messbeginn für den Integratorkanal, was jedoch nicht unbedingt der Fall sein muss;
c) mindestens eine Datenverarbeitungseinheit, welche die Signale des Zählerausgangs und des Integratorausgangs in Kombination verarbeitet, um die absorbierte Menge an Röntgenstrahlung zu bestimmen.
dadurch gekennzeichnet, dass die Datenverarbeitungseinheit so eingerichtet ist, dass sie bei geringer Absorptionsrate der Röntgenquanten die Signale des Zählerausganges mit größerem Gewicht berücksichtigt als die Signale des Integratorausganges, und dass sie bei hoher Absorptionsrate der Röntgenquanten die Signale des Integratorausganges mit größerem Gewicht berücksichtigt als die Signale des Zählerausganges.

Bei dem Röntgendetektor werden demnach in der Auswerteeinheit parallel ein Zählverfahren und ein Integrationsverfahren für die erzeugten Ladungssignale durchgeführt, wobei die Ergebnisse dieser Verfahren in der Datenverarbeitungseinheit gemeinsam verwendet und zur Bestimmung eines Gesamtergebnisses für die absorbierte Menge an Röntgenstrahlung genutzt werden. Die absorbierte "Menge an Röntgenstrahlung" kann dabei sowohl als absorbierte Energie pro Zeit als auch als Anzahl absorbierter Röntgenquanten pro Zeit oder als eine geeignet definierte kombinierte Größe quantifiziert werden. Die gleichzeitige Durchführung zweier Messmethoden (Zählen und Integration) hat den Vorteil, dass der Anwender nicht vorab festlegen muss, welche Methode allein durchzuführen ist, so dass es nicht versehentlich zu einer suboptimalen Auswertung der Messergebnisse kommen kann. Der erfindungsgemäße Röntgendetektor arbeitet somit gegenüber bekannten Detektoren in einem erheblich vergrößerten Dynamikbereich. Dies ist insbesondere bei medizinischen Anwendungen wichtig, wo die Röntgenbelastung zu minimieren ist, sowie bei solchen Anwendungen, wo eine Voreinschätzung der zu erwartenden Quantenflüsse nicht möglich oder zu umständlich ist.

-Im Extremfall kann die Gewichtung so stark verschoben werden, dass die Menge an Röntgenstrahlung allein aus den Signalen des Zählerausganges bestimmt wird. Bei geringen Absorptionsraten beziehungsweise niedrigen Quantenflüssen arbeitet das Zählverfahren optimal, da dann Totzeiteffekte und geringe Bandbreiten keine Rolle spielen. Elektronisches Rauschen, Dunkelströme und Nachbildeffekte werden durch die Detektion einzelner Ladungssignale stark unterdrückt. Im Gegensatz hierzu arbeitet das Integrationsverfahren bei geringen Quantenflüssen durch das elektronische Rauschen, durch Dunkelströme und durch mögliche Nachbildeffekte verhältnismäßig ungenau. Die vorgeschlagene höhere Gewichtung des Zählverfahrens bei geringen Absorptionsraten berücksichtigt dieses typische Verhalten der Messverfahren und führt durch die stärkere Berücksichtigung des präziseren Zählverfahrens somit zu besseren Endergebnissen.

Im Extremfall kann auch hier die absorbierte Menge an Röntgenstrahlung allein aus den Signalen des Integratorausganges bestimmt werden. Bei hohen Absorptionsraten beziehungsweise Quantenflüssen arbeitet der Integratorkanal optimal, da elektronisches Rauschen, Dunkelströme und Nachbildeffekte praktisch keine Rolle spielen. Im Gegensatz dazu ist der Zählkanal durch Totzeiteffekte in seiner Genauigkeit stark beeinträchtigt. Auch hier berücksichtigt somit die Daten-verarbeitungseinheit das charakteristische Verhalten der beiden Messkanäle bei der Bestimmung des Gesamtergebnisses derart, dass diese entsprechend ihrer Präzision gewichtet werden. Damit lässt sich insgesamt ein besseres Endergebnis für die Menge der absorbierten Röntgenstrahlung erzielen als es bei Verwendung eines einzigen Zahlverfahrens möglich wäre.

Gemäß einer anderen Weiterbildung der Erfindung ist die Datenverarbeitungseinheit so eingerichtet, dass sie aus den Signalen des Zählerausganges und den Signalen des Integratorausganges die mittlere Energie der absorbierten Röntgenquanten bestimmt. Typischsrweise werden hierzu in einem Messintervall die absorbierten Röntgenquanten gezählt und die dabei absorbierten Energien integriert. Am Ende des Messintervalls wird dann die gesamte absorbierte Energie durch die Anzahl der absorbierten Röntgenquanten dividiert, um die mittlere Energie pro Röntgenquant zu erhalten. Diese mittlere von den Röntgenquanten deponierte Energie beinhaltet eine wertvolle Information, die mit einem Messverfahren allein (Zählung oder Integration) nicht gewonnen werden könnte.

Der Aufbau der Auswerteinheit ist vorzugsweise so, dass sie einen Eingangsverstärker aufweist, welcher das von der Konversionseinheit bereitgestellte Ladungssignal vorverarbeitet. Die Vorverarbeitung kann insbesondere in einer entsprechenden Verstärkung dieses Signals bestehen. Ferner kann das Ladungsignal in eine andere Signalart wie z.B. ein Spannungssignal umgewandelt werden, welche sich besser für eine Verteilung an mehrere Kanäle eignet. Das vorverarbeitete Signal wird vom Eingangsverstärker sowohl an den Zählkanal als auch an den Integratorkanal weitergeleitet. Bei diesem Aufbau wird somit in vorteilhafter Weise ein einziger Eingangsverstärker dazu verwendet, die Signale sowohl für den Zählkanal als auch für den Integratorkanal aufzubereiten. Eine nur schwer zu steuernde Aufteilung der von der Konversionseinheit bereitgestellten, in der Regel geringen Ladungsmengen auf zwei Kanäle kann hierdurch vermieden werden. Die gemeinsame Nutzung eines Eingangsverstärkers verringert darüber hinaus den konstruktiven Aufwand und garantiert gleichzeitig, dass keine Artefakte durch unterschiedliches Verhaltes der Eingangsverstärkungen zu den Messkanälen entstehen.

Bei dem Röntgendetektor kann es sich um ein einzelnes Bildelement mit nur einer Konversionseinheit, einer Auswerteeinheit und einer Datenverarbeitungseinheit handeln. Vorzugsweise enthält der Röntgendetektor jedoch mehrere Konversionseinheiten, die in einer Fläche verteilt angeordnet sind. Insbesondere kann diese Anordnung matrixartig sein, wobei die mehreren Konversionseinheiten in Spalten und Zeilen angeordnet sind und jede der Konversionseinheiten ein Bildelement (Pixel) einer Röntgendetektor-Anordnung bildet.

Bei einer solchen Röntgendetektor-Anordnung mit mehreren Konversionseinheiten ist vorzugsweise jeder Konversionseinheit genau eine Auswerteeinheit und genau eine Datenverarbeitungseinheit zugeordnet, damit die von der Konversionseinheit als Bildelement erzeugten Ladungssignale schnell und zuverlässig ausgewertet werden können. Ferner sind vorteilhafterweise alle Auswerteeinheiten und Datenverarbeitungseinheiten mikroelektronisch auf einem gemeinsamen Substrat ausgebildet und von dort mit den Konversionseinheiten elektrisch verbunden. Die Konversionseinheiten können dabei z.B. oberhalb der elektronischen Einheiten auf dem Substrat angeordnet sein. Für die Herstellung der mikroelektronischen Strukturen kann insbesondere eine CMOS Technik eingesetzt werden.

Die Erfindung betrifft weiterhin ein Verfahren zur Auswertung der Absorptionssignale eines Röntgendetektors, welcher vorzugsweise in einem Computertomographen gegenüber einer Röntgenquelle angeordnet ist. Mit dem Röntgendetektor wird dabei typischerweise bestimmt, wieviel Röntgenstrahlung von einem zwischen der Röntgenstrahlungsquelle und dem Detektor angeordneten Untersuchungsgegenstand, zum Beispiel dem Körper eines Patienten, absorbiert wird. Das Verfahren enthält die folgenden Schritte:
a) Zählen der in einem Zeitintervall vom Röntgendetektor absorbierten Röntgenquanten;
b) Parallel zu Schritt a) Integration der Absorptionsenergien der in dem genannten Zeitintervall absorbierten Röntgenquanten zur Bestimmung der gesamten im Röntgendetektor deponierten Energie,
c) Bestimmung der absorbierte Menge an Röntgenstrahlung durch das in Kombination verarbeiten von den Messungen der Schritte a) und b),
dadurch gekennzeichnet, dass bei geringer Absorptionsrate der Röntgenquanten die Zählungsmessung aus Schritt a) mit größerem Gewicht berücksichtigt wird als die Integrationsmessung aus Schritt b), und dass bei hoher Absorptionsrate der Röntgenquanten die Integrationsmessung aus Schritt b) mit größerem Gewicht berücksichtigt wird als die Zählungsmessung aus Schritt a).

Gemäß einer anderen Weiterbildung der Erfindung wird, bei dem neuen Verfahren an der Ausgangsseite des Röntgendetektors sowohl die Anzahl der absorbierten Röntgenquanten als auch die insgesamt von diesen deponierte Energie bestimmt. Aus diesen beiden Werten kann dann die mittlere Absorptionsenergie pro Röntgenquant als der Quotient aus dem Integral der Absorptionsenergien und der Anzahl der Röntgenquanten berechnet werden. Durch Vergleich dieser mittleren Absorptionsenergie mit dem als bekannt vorausgesetzten Emissionsspektrum der Röntgenstrahlungsquelle können wertvolle Informationen über das von der Wellenlänge abhängige Absorptionsverhalten des untersuchten Gegenstandes gewonnen werden. So absorbiert das Körpergewebe eines Patienten zum Beispiel Röntgenquanten niedrigerer Energie stärker als Röntgenquanten höherer Energie. Eine solche verstärkte Absorption niederenergetischer Röntgenquanten macht sich in einer Erhöhung der mittleren Röntgenquantenenergie nach Durchgang durch den Körper des Patienten bemerkbar, was als "Strahlaufhärtung" bezeichnet wird. Diese Strahlaufhärtung fällt je nach Art des durchstrahlten Gewebes unterschiedlich aus, so dass sie eine zusätzliche Information über das Gewebe liefert. Im Extremfall ist es denkbar, dass zwei durchstrahlte Objekte jeweils den gleichen Prozentsatz der insgesamt eingestrahlten Energie und/oder den gleichen Prozentsatz der Anzahl der eingestrahlten Röntgenquanten absorbieren und daher durch eine reine Feststellung der absorbierten Energie beziehungsweise der absorbierten Anzahl an Röntgenquanten nicht unterscheidbar sind. Wenn diese zwei Objekte jedoch die Röntgenquanten bei unterschiedlichen Wellenlängen verschieden stark absorbieren, führen sie zu einer unterschiedlichen Strahlaufhärtung welche mit dem erfindungsgemäßen Verfahren nachgewiesen werden kann. Durch die vorgeschlagene Kombination eines Zählverfahrens und eines Integrationsverfahrens kann somit eine Information gewonnen werden, die bei separater Anwendung der Verfahren nicht verfügbar ist.

Durch ein entsprechend kurz gewähltes Zeitintervall für die Durchführung des Zählens und der Integration bei dem vorgeschlagenen Verfahren ist es theoretisch möglich, die Energie jedes einzelnen absorbierten Röntgenquants zu bestimmen, woraus wiederum das Energiespektrum der Röntgenstrahlung nach Durchtritt durch den zu untersuchenden Gegenstand bestimmbar ist. Mit anderen Worten kann durch die Länge des Zeitintervalls beeinflusst werden, mit welcher Auflösung das Energiespektrum der Röntgenstrahlung nach Durchtritt bestimmt wird.

Für die Durchführung des Verfahrens eignet sich insbesondere ein Röntgendetektor der oben erläuterten Art, bei dem eine Auswerteeinheit Ladungssignale einer Konversionseinheit parallel durch einen Zälkanal und einen Integratorkanal verarbeitet.

Im Folgenden wird die Erfindung mit Hilfe der Figur beispielhaft erläutert. Die einzige Figur zeigt in einem Blockschaltbild die Komponenten eines erfindungsgemäßen Röntgendetektors.

In der Konversionseinheit 1 werden die Röntgenquanten größtenteils absorbiert und nach ihrer Absorption in ein elektrisches Ladungssignal umgewandelt, dessen Größe in etwa proportional zur absorbierten Energie ist. Dabei spielt es vorliegend keine Rolle, ob die Umwandlung der Röntgenquanten in die Ladungssignale direkt (mittels sogenannter direktkonvertierender Materialien, zB. Gasen wie Xe, Halbleitern wie GaAs, CdTe, CdZnTe, oder Fotoleitem wie Se, PbI₂ oder PbO) oder indirekt erfolgt (zum Beispiel durch Umwandlung in niedecenergetische Lichtquanten mittels eines szintillierenden Materials und anschließende Detektion durch eine Fotodiode aus kristallinem oder amorphem Silicium).

Die von der Konversionseinheit 1 erzeugten Ladungssignale werden dann dem Eingangsverstärker 2 der Auswerteeinheit 10 zugeführt. Die Auswerteeinheit ist typischerweise als integrierte Schaltung realisiert, zum Beispiel als CMOS-Schaltkreis. In der Auswerteeinheit werden die Ladungssignale vom Eingangsverstärker 2 in ein anderes Signal (zum Beispiel Spannungssignal) umgewandelt. Der Eingangsverstärker ist in der Regel ein ladungsempfindlicher Verstärker ("charge sensitive amplifier" CSA), typischerweise eine Integratorschaltung, die häufig einen Entladewiderstand ("bleeding resistor") aufweist. Ein solcher Verstärker erzeugt für jeden kurzzeitigen Ladungspuls am Eingang eine exponentiell abfallende Spannung am Ausgang, wobei die Fläche unter dieser Exponentialkurve proportional zur Ladung innerhalb des Pulses ist.

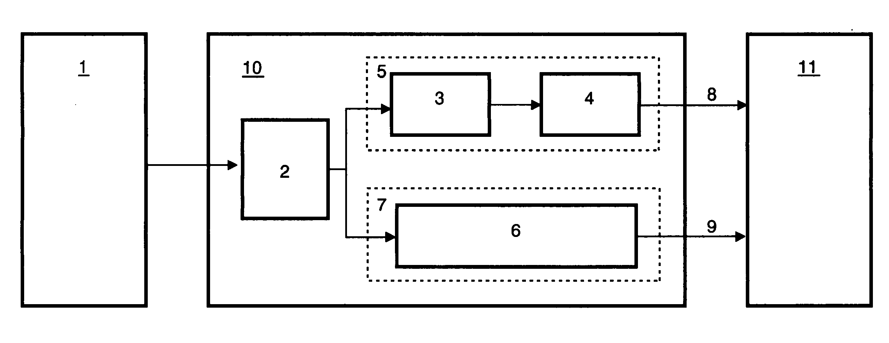

An der Ausgangsseite des Eingangsverstärkers sind parallel ein Zählkanal 5 und ein Integratorkanal 7 angeschlossen. Der Zählkanal besteht aus einem Ereignis-Diskriminator 3, dem ein Zähler 4 folgt. Der Ereignis-Diskriminator 3 besteht typischerweise aus einem signalformenden Verstärker ("shaping amplifier") und einem Komparator mit einstellbarem Schwellwert. Aufgabe des Ereignis-Diskriminators 3 ist es, für jeden Ladungspuls von der Konversionseinheit 1, der eine vorgegsbene Ladungsmenge übersteigt, ein digitales Ausgangseignal (Zählpuls) zu erzeugen (vgl. Figur 1 aus M. Overdick et al., "A'Bioscope' system using double sided silicon strip detectors and self-triggering read-out chip", Nucl. Instr. and Meth. A392 (1997) 173-177). Bei dem Zähler 4 handelt es sich um einen elektronischen Digitalzähler mit n-Bit Zähltiefe. Eine besonders platzsparende Variante sind lineare rückgekoppelte Schieberegister (vgl. P. Fischer et a1., a.a.O).

Der Integratorkanal besteht aus einer Schaltung, die als "Gesamtsignal-Erfasser" 6 bezeichnet werden kann und die die gesamte während einer Integrationsperiode von der Konversionseinheit 1 gelieferte Ladungsmenge erfasst. Für seine Realisierung gibt es unter anderem die folgenden Möglichkeiten:
- Integratorschaltung mit analogem Ausgang;
- Spannungs-Frequenzwandler mit nachgeschaltetem Zähler (vgl. DE 199 45 757.3);
- Delta-Sigma-Konverter (vgl. S.R. Norsworthy, R. Schreier, G.C. Temes, "Delta-Sigma Data Convertes", IEEE Press, 1997).

Der Stand des Zählers 4 wird am Zählerausgang 8 an die Datenverarbeitungseinheit 11 weitergegeben. In ähnlicher Weise wird das Ergebnis der Integration am Integratorausgang 9 der Datenverarbeitung übermittelt. In der Datenverarbeitungseinheit 11 können somit sowohl die Ergebnisse des Zählkanals 5 als auch des Integratorkanals 7 parallel ausgewertet werden. Hierdurch ergibt sich ein gegenüber dem Stand der Technik vergrößerter Dynamikbereich des Röntgendetekors, da bei niedrigen Quantenflüssen auf die präziseren Ergebnisse des Zählkanals zurückgegriffen werden kann, während bei hohen Quantenflüssen der dann genauere Integratorkanal bevorzugt wird. Durch die gleichzeitige zählende als auch integrierende Erfassung der Signale in jeder Pixelzelle eines Röntgendetektors können daher die Vorteile der beiden Messmethoden kombiniert werden.

Darüber hinaus ist es bei mittleren Quantenflüssen möglich, zusätzliche Informationen zu gewinnen, welche bei einer separaten Anwendung eines Zählverfahrens oder eines Integrationsverfahrens nicht verfügbar ist. Da der Integratorkanal 7 die absorbierte Energie und der Zählkanal 5 die Anzahl der absorbierten Röntgenquanten erfasst, kann durch eine Kombination der beiden Signale zum Beispiel die mittlere Energie der absorbierten Quanten bestimmt werden. Diese stellt ein Maß für die im untersuchten Objekt eintretende Strahlaufhärtung dar, welches vorteilhaft zur Bestimmung und Unterscheidung der Gewebearten verwendet werden kann.

## Patentansprüche

1. Röntgendetektor, enthaltend
a) mindestens eine Konversionseinheit (1) zur Absorption von Röntgenquanten unter Erzeugung eines zur absorbierten Energie korrespondierenden elektrischen Ladungssignals,
b) mindestens eine Auswerteeinheit (10) zur Verarbeitung des genannten Ladungssignals in einem Zählkanal (5), welcher an seinem Zählerausgang (8) ein Maß für die Anzahl der seit einem Messbeginn erfassten Ladungssignale bereitstellt, sowie parallel hierzu in einem Integratorkanal (7), welcher an seinem Integratorausgang (9) ein Maß für die gesamte Ladung der seit einem Messbeginn erfassten Ladungssignale bereitstellt,
c) mindestens eine Datenverarbeitungseinheit (11), welche die Signale des Zählerausganges (8) und des Integratorausganges (9) in Kombination verarbeitet, um die absorbierte Menge an Röntgenstrahlung zu bestimmen,
**dadurch gekennzeichnet,**
**dass** die Datenverarbeitungseinheit (11) so eingerichtet ist, dass sie bei geringer Absorptionsrate der Röntgenquanten die Signale des Zählerausganges (8) mit größerem Gewicht berücksichtigt als die Signale des Integratorausganges (9), und
**dass** sie bei hoher Absorptionsrate der Röntgenquanten die Signale des Integratorausganges (9) mit größerem Gewicht berücksichtigt als die Signale des Zählerausganges (8).

2. Röntgendetektor nach Anspruch 1,
**dadurch gekennzeichnet**
**dass** die Datenverarbeitungseinheit (11) so eingerichtet ist, dass sie aus den Signalen des Zählerausganges (8) und des Integratorausganges (9) die mittlere Energie der erfassten Röntgenquanten bestimmt.

3. Röntgendetektor nach Anspruch 1 oder 2,
**dadurch gekennzeichnet,**
**dass** die Auswerteeinheit (10) einen Eingangsverstärker (2) aufweist, welcher das von der Konversionseinheit (1) bereitgestellte Ladungssignal vorverarbeitet, insbesondere verstärkt, und welcher das so vorverarbeitete Signal an den Zählkanal (5) und den Integratorkanal (7) weiterleitet.

4. Röntgendetektor nach mindestens einem der Ansprüche 1 bis 3,
**dadurch gekennzeichnet,**
**dass** er mehrere Konversionseinheiten (1) enthält, welche in einer Fläche verteilt und vorzugsweise matrixartig angeordnet sind.

5. Röntgendetektor nach Anspruch 4,
**dadurch gekennzeichnet,**
**dass** jeder Konversionseinheiten (1) eine Auswerteeinheit (10) und eine Datenverarbeitungseinheit (11) zugeordnet ist, wobei alle Auswerteeinheiten und Datenverarbeitungseinheiten mikroelektronisch auf einem gemeinsamen Substrat ausgebildet sind.

6. Verfahren zur Auswartung der Absorptionssignale eines Röntgendetektors, welcher vorzugsweise in einem Computertomographen gegenüber einer Röntgenstrahlungsquelle angeordnet ist, enthaltend die folgenden Schritte:
a) Zählen der in einem Zeitintervall vom Röntgendetektor absorbierten Röntgenquanten;
b) Parallel zu Schritt a) Integration der Absorptionsenergien der in dem genannten Zeitintervall absorbierten Röntgenquanten,
c) Bestimmung der absorbierte Menge an Röntgenstrahlung durch das in Kombination verarbeiten von den Messungen der Schritte a) und b),
**dadurch gekennzeichnet,**
**dass** bei geringer Absorptionsrate der Röntgenquanten die Zählungsmessung aus Schritt a) mit größerem Gewicht berücksichtigt wird als die Integrationsmessung aus Schritt b), und dass bei hoher Absorptionsrate der Röntgenquanten die Integrationsmessung aus Schritt b) mit größerem Gewicht berücksichtigt wird als die Zählungsmessung aus Schritt a).

7. Verfahren nach Anspruch 6,
**dadurch gekennzeichnet,**
**dass** es mit einem Röntgendetektor nach mindestens einem der Ansprüche 1 bis 5 durchgeführt wird.

8. Röntgenuntersuchungsgerät mit einer Röntgenstrahlungsquelle zur Abgabe von Röntgenstrahlung und einem Röntgendetektor nach Anspruch 1.

## Claims

1. X-ray detector comprising
a) at least one conversion unit (1) for absorbing X-ray quanta while generating an electric charge signal corresponding to the absorbed energy,
b) at least one evaluation unit (10) for processing said charge signal in a counting channel (5), which counting channel provides at its counter output (8) a measure for the number of the charge signals that have been detected since the start of the measuring process, as well as for processing, parallel thereto, in an integrator channel (7), the integrator output (9) portion of which provides a measure for the entire charge of the charge signals that have been detected since the start of the measuring process,
c) at least one data processing unit (11) that processes in combination the signals of the counter output (8) and of the integrator output (9) in order to determine the amount of X-rays absorbed,
**characterised in that**
the data processing unit (11) is configured in such a manner that with lower absorption rates of the X-ray quanta, said data processing unit gives greater consideration to the signals from the counter output (8) than to the signals of the integrator output (9), and furthermore, with higher absorption rates, said data processing unit gives greater consideration to the signals from the integrator output (9) than to the signals from the counter output (8).

2. X-ray detector set forth in claim 1,
**characterised in that**
the data processing unit (11) is configured in such a manner that it determines the average energy of the detected X-ray quanta from the signals from the counter output (8) and from the signals from the integrator output (9).

3. X-ray detector set forth in claim 1 or claim 2,
**characterised in that**
the evaluation unit (10) has an input amplifier (2) that both pre-processes, in particular amplifies, the charge signal provided by the conversion unit (1), and furthermore conducts the thusly pre-prepared signal to the counting channel (5) and to the integrator channel (7).

4. X-ray detector set forth in at least one of claims 1 to 3,
**characterised in that**
said X-ray detector contains a plurality of conversion units (1) that are arranged distributed in a sheet form, preferably in a matrix.

5. X-ray detector set forth in claim 4,
**characterised in that**
each conversion unit (1) is associated with an evaluation unit (10) and a data processing unit (11), all evaluation units and data processing units being configured on a common sub strate.

6. A method for evaluating the absorption signals of an X-ray detector, which is preferably arranged in a computed tomography source as opposed to an X-ray source, comprising of the following steps:
a) counting the X-ray quanta absorbed by the X-ray detector in a time period;
b) parallel to step a), integrating the absorption energies of the X-ray quanta absorbed during said time period;
c) determination of the absorbed amount of X-rays through the combination of the measurements processed in steps a) and b),
**characterised in that**
with lower X-ray absorption rates, the counting measurement from step a) is given greater consideration than the integration measurement from step b), while with higher X-ray absorption rates, the integration measurement from step b) is given greater consideration than counting measurement from step a).

7. The method set forth in claim 6,
**characterised in that**
said method is carried out with an X-ray detector according to at least one of the claims 1 to 5.

8. X-ray examination device having an X-ray source for emitting X-rays as well as an X-ray detector as in claim 1.

## Revendications

1. Détecteur de rayons X, comprenant
a) au moins une unité de conversion (1) permettant d'absorber des quanta de rayons X en générant un signal de charge électrique correspondant à l'énergie absorbée,
b) au moins une unité d'évaluation (10) permettant de traiter ledit signal de charge dans un canal de comptage (5) qui met à disposition à sa sortie de compteur (8) une mesure du nombre de signaux de charge saisis depuis un début de mesure, ainsi que parallèlement à ceci dans un canal d'intégration (7) qui met à disposition à sa sortie d'intégrateur (9) une mesure de l'ensemble de la charge des signaux de charge saisis depuis un début de mesure,
c) au moins une unité de traitement des données (11) qui traite par combinaison les signaux de la sortie de compteur (8) et de la sortie d'intégrateur (9) afin de déterminer la quantité de rayons X absorbée,
**caractérisé en ce que**
l'unité de traitement des données (11) est conçue de telle sorte que dans le cas d'un faible taux d'absorption des quanta de rayons X, elle tient compte des signaux de la sortie de compteur (8) en leur donnant plus de poids qu'aux signaux de la sortie d'intégrateur (9), et **en ce que** dans le cas d'un taux d'absorption élevé des quanta de rayons X, elle tient compte des signaux de la sortie d'intégrateur (9) en leur donnant plus de poids qu'aux signaux de la sortie de compteur (8).

2. Détecteur de rayons X selon la revendication 1,
**caractérisé en ce que**
l'unité de traitement des données (11) est conçue de telle sorte qu'elle détermine à partir des signaux de la sortie de compteur (8) et de la sortie d'intégrateur (9), l'énergie moyenne des quanta de rayons X saisis.

3. Détecteur de rayons X selon la revendication 1 ou 2,
**caractérisé en ce que**
l'unité d'évaluation (10) présente un amplificateur d'entrée (2) qui prétraite, en particulier amplifie, le signal de charge mis à disposition par l'unité de conversion (1) et qui transfère le signal ainsi prétraité au canal de comptage (5) et au canal d'intégration (7).

4. Détecteur de rayons X selon au moins l'une quelconque des revendications 1 à 3,
**caractérisé en ce que**
il comprend plusieurs unités de conversion (1) qui sont réparties sur une surface et disposées de préférence à la manière d'une matrice.

5. Détecteur de rayons X selon la revendication 4,
**caractérisé en ce que**
une unité d'évaluation (10) et une unité de traitement des données (11) sont affectées à chaque unité de conversion (1), toutes les unités d'évaluation et unités de traitement des données étant réalisées du point de vue microélectronique sur un substrat commun.

6. Procédé d'évaluation des signaux d'absorption d'un détecteur de rayons X, qui est agencé de préférence dans un tomodensitomètre face à une source de rayons X, comprenant les étapes suivantes consistant à :
a) compter les quanta de rayons X absorbés par le détecteur de rayons X dans un intervalle de temps ;
b) parallèlement à l'étape a) intégrer les énergies d'absorption des quanta de rayons X absorbés dans ledit intervalle de temps,
c) déterminer la quantité de rayons X absorbée par le traitement combiné des mesures des étapes a) et b),
**caractérisé en ce que**
dans le cas d'un faible taux d'absorption des quanta de rayons X, la mesure de comptage de l'étape a) est prise en compte en lui donnant plus de poids qu'à la mesure d'intégration de l'étape b), et **en ce que** dans le cas d'un taux d'absorption élevé des quanta de rayons X, la mesure d'intégration de l'étape b) est prise en compte en lui donnant plus de poids qu'à la mesure de comptage de l'étape a).

7. Procédé selon la revendication 6,
**caractérisé en ce que**
il est réalisé avec un détecteur de rayons X selon au moins l'une quelconque des revendications 1 à 5.

8. Appareil d'examen aux rayons X avec une source de rayons X permettant l'émission de rayons X et avec un détecteur de rayons X selon la revendication 1.
